# EUROPÄISCHE PATENTSCHRIFT

(11) **EP 0 471 831 B1**
(45) Veröffentlichungstag und Bekanntmachung des Hinweises auf die Patenterteilung: **14.08.1996**
(21) Anmeldenummer: 91906313.1
(22) Anmeldetag: 07.03.1991
(51) Int. Cl.: C09K 19/30, C09K 19/42, C09K 19/44

(54) **FLÜSSIGKRISTALLINES MEDIUM**
LIQUID CRYSTALLINE MEDIUM
MILIEU CRISTALLIN LIQUIDE

(30) Priorität: 09.03.1990 DE 4007412
(43) Veröffentlichungstag der Anmeldung: 26.02.1992
(73) Patentinhaber: MERCK PATENT GmbH, D-64271 Darmstadt (DE)
(72) Erfinder: RIEGER, Bernhard, Wacore, Tamagawagakuen, Yokokama-shi, Kanagawa pref. 227 (JP); KURMEIER, Hans-Adolf, D-6104 Seeheim-Jugenheim (DE); POETSCH, Eike, D-6109 Mühltal 6 (DE); PLACH, Herbert, D-6100 Darmstadt (DE); BARTMANN, Ekkehard, D-6106 Erzhausen (DE)
(86) Internationale Anmeldenummer: EP9100428
(87) Internationale Veröffentlichungsnummer: WO9113947

(56) Entgegenhaltungen:
- EP-A- 0 064 193
- EP-A- 0 291 949
- EP-A- 0 318 003
- EP-A- 0 390 395
- EP-A- 0 406 468
- EP-A- 0 414 048
- WO-A-91/00898
- WO-A-91/02779
- WO-A-91/10716
- WO-A-91/11497

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-zellen (Deformation aufgerichteter Phasen), Gast/Wirt-Zellen, TN-Zellen mit verdrillt nematischer ("twisted nematic") Struktur, STN-Zellen ("super-twisted nematiic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben. Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand und geringem Dampfdruck erwünscht.

Matrix-Flüssigkristallanzeigen gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polaristoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung.

Der Erfindung liegt die Aufgabe zugrunde, Medien insbesondere für derartige MFK-Anzeigen bereitzustellen, die die oben angegebenen Nachteile nicht oder nur in geringerem Maße, gleichzeitig sehr hohe spezifische Widerstände und niedrige Schwellenspannungen aufweisen.

Ähnliche Medien sind in den Dokumenten EP-A-390395, EP-A-406468, EP-A-414048, WO-A-9100898, WO-A-9102779, WO-A-9110716 und WO-A-9111497 beschrieben, die Stand der Technik nach Artikel 54(3) darstellen.

Es wurde nun gefunden, daß diese Aufgabe gelöst werden kann, wenn man in diesen MFK-Anzeigen erfindungsgemäße Medien verwendet.

Gegenstand der Erfindung ist somit ein flüssigkristallines Medium bestehend im wesentlichen aus
a) 5-65 Gew.% einer Komponente A bestehend aus zwei oder mehr Verbindungen ausgewählt aus der Gruppe A: 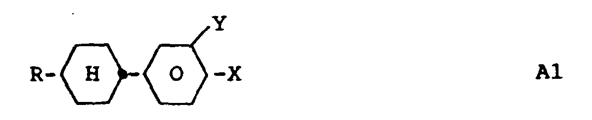 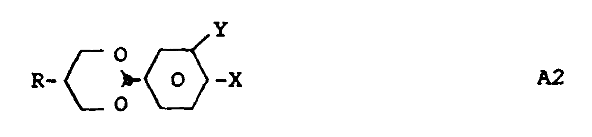 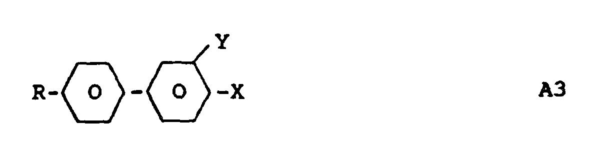 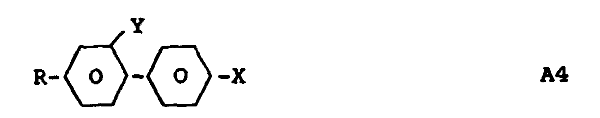
b) 20-95 Gew.% einer Komponente B bestehend aus zwei oder mehr Verbindungen ausgewählt aus der Gruppe B: 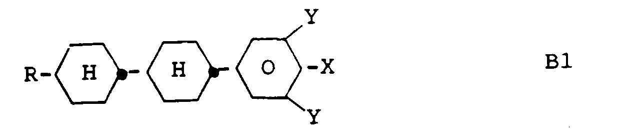 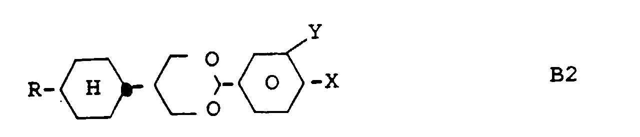 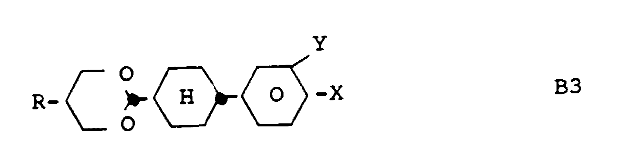 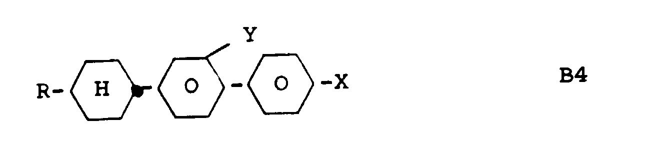 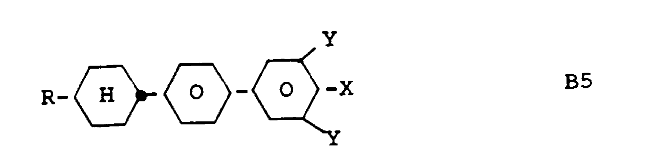 und
c) 0-40 Gew.% einer Komponente C bestehend aus einer oder mehreren Verbindungen mit einem Klärpunkt oberhalb 170 °C,
   wobei R, X und Y jeweils unabhängig voneinander die folgenden Bedeutungen haben:
   - R: jeweils Alkyl, Oxaalkyl, Halogenalkyl oder Alkenyl mit bis zu 7 C-Atomen,
   - X: F, Cl, CHF₂ , CF₃, OCHF₂ oder OCF₃ und
   - Y: H, F oder Cl,
   mit der Maßgabe, daß ein Medium enthaltend eine oder mehrere der folgenden Verbindungen ausgeschlossen ist: 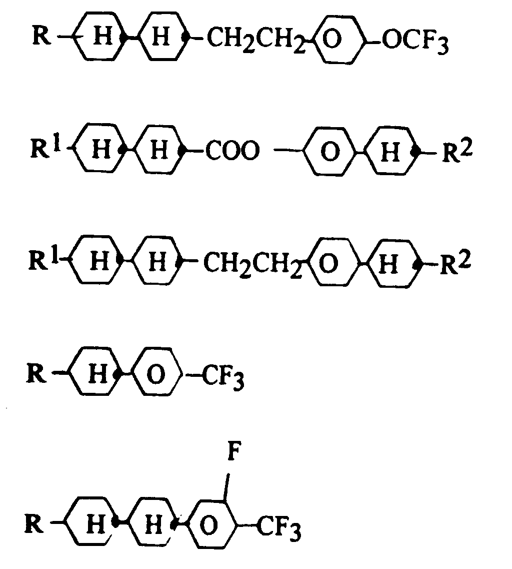 wobei R, R1 und R2 jeweils unabhängig voneinander geradkettiges Alkyl mit bis zu 9 C-Atomen bedeuten.

Für die Vertragsstaaten DE, FR und GB sind zusätzlich Medien enthaltend eine oder mehrere Verbindungen der Formel 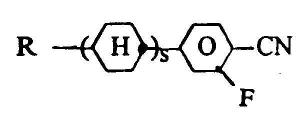 ausgeschlossen, worin R geradkettiges Alkyl mit bis zu 9 C-Atomen bedeutet und s 1 oder 2 ist.

Gegenstand der Erfindung sind auch elektrooptische Anzeigen (insbesondere MFK-Anzeigen), die derartige Medien enthalten sowie die Verwendung dieser Medien für elektrooptische Zwecke.

Die erfindungsgemäßen Flüssigkristallmischungen ermöglichen es bei niedrigen Viskositäten gleichzeitig Schwellenspannungen vorzugsweise ≤ 1,65 Volt, Klärpunkte oberhalb 60°C, vorzugsweise oberhalb 80°C und einen hohen Wert für den spezifischen Widerstand zu erreichen, wodurch hervorragende MKF-Anzeigen erzielt werden können. Es versteht sich, daß durch geeignete Wahl der Komponenten der erfindungsgemäßen Mischungen auch höhere Klärpunkte (z.B. oberhalb 90°C) bei höheren Schwellenspannung (Vₜₕ < 2,2 Volt) unter Erhalt der anderen vorteilhaften Eigenschaften realisiert werden können. Besonders bevorzugt sind Mischungen enthaltend Komponente der Formeln B1 und/oder B5, die auch bei höheren Klärpunkten überraschend niedrige Schwellenspannungen aufweisen. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhangigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Viskosität bei 20 °C ist vorzugsweise ≦ 25 mPa.s. Der nematische Phasenbereich ist vorzugsweise mindestens 70°C, insbesondere mindestens 80°C. Vorzugsweise erstreckt sich dieser Bereich mindestens von -20°C bis +70°C.

Die einzelnen Verbindungen, insbesondere diejenigen der Formeln A1 bis A4, B1 bis B5, C1 und C2 und deren Unterformeln, die in den erfindungsgemäßen MFK-Anzeigen verwendet werden können, sind entweder bekannt (Internationale Patentanmeldungen PCT/EP 90/01471, WO 89/02884, DE-OS 29 07 332, DE-OS 30 42 391, DE-OS 29 44 905, Europäische Patentanmeldungen 0 387 032, 02 80 902, 0 051 738, 0 125 653, US-Patente 4,302,352; 4,710315; 4,419,264), oder sie können analog zu den bekannten Verbindungen hergestellt werden.

Bevorzugte Ausführungsformen sind im folgenden angegeben:
- der Anteil an Verbindungen der Formeln A1 bis A4 zusammen beträgt im Gesamtgemisch 5 bis 45 Gew.-%, vorzugsweise 10 bis 40 Gew.-%
- der Anteil an Verbindungen der Formel B1 bis B5 zusammen beträgt im Gesamtgemisch 50 bis 95 Gew.-%, vorzugsweise 55 bis 90 Gew.-%
- der Anteil an Verbindungen der Formeln C1 und C2 zusammen im Gesamtgemisch beträgt 0 bis 15 Gew.-%, vorzugsweise 2 bis 10 Gew.-%
- Y in Formel A1 ist H
- 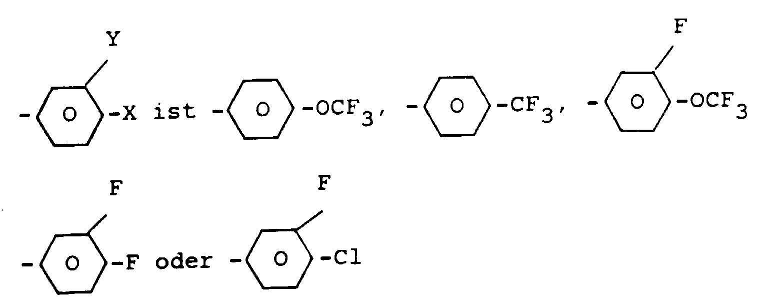
- das Medium enthält gleichzeitig Verbindungen der Formeln B1 und B4 und/oder B5.
- R ist geradkettiges Alkyl oder Alkenyl mit 2 bis 7 C-Atomen
- das Medium besteht im wesentlichen aus Verbindungen der Formeln A1, B1 und B4 und/oder B5
- das Medium enthält weitere Verbindungen, vorzugsweise ausgewählt aus der folgenden Gruppe D: 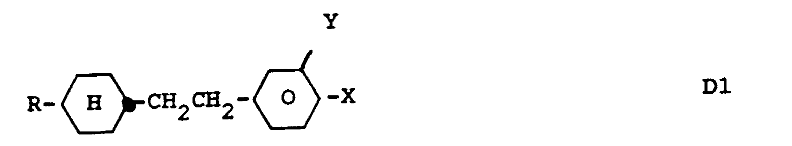 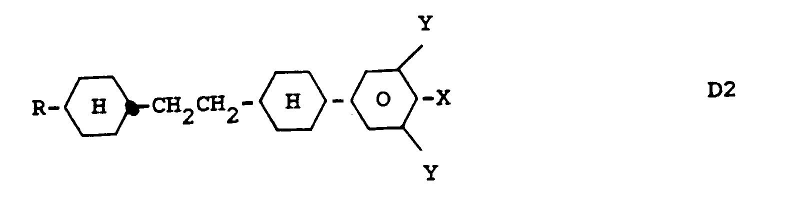 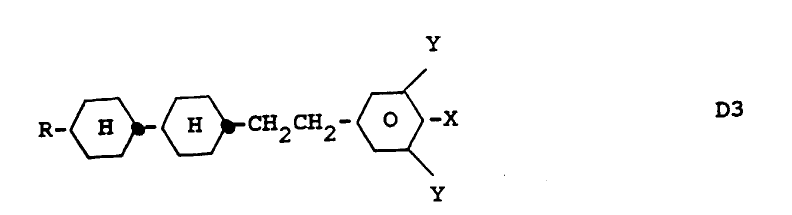 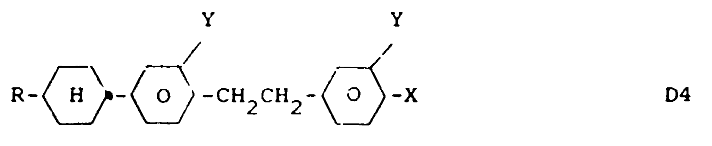 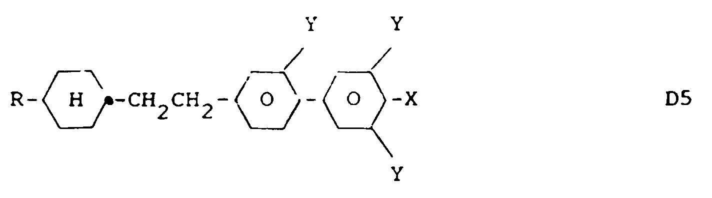 das Medium enthält eine oder mehrere Verbindungen ausgewählt aus der Gruppe C: 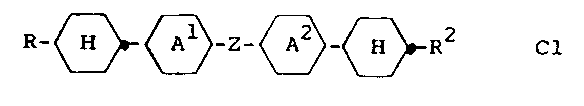 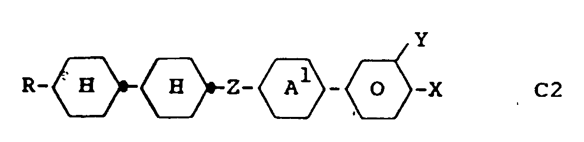 worin R, X und Y die bei den Formeln A1 bis A4 angegebenen Bedeutungen haben,
   R² eine der für R angegebene Bedeutungen hat, Z -C₂H₄-, -CO-O-, -O-CO- oder eine Einfachbindung und A¹ und A² jeweils unabhängig voneinander trans-1,4-Cyclohexylen, 1,4-Phenylen oder 2-oder 3-Fluor-1,4-phenylen bedeuten.

Der Anteil dieser Materialien beträgt vorzugsweise weniger als 35 Gew.-%, insbesondere vorzugsweise 0 bis 15 Gew.-%. D2 und D3 sind besonders bevorzugt. R hat die angegebenen bevorzugten Bedeutungen. 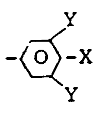 ist vorzugsweise 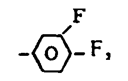 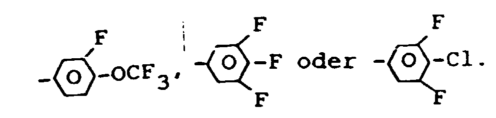 Diese bevorzugten Bedeutungen gelten auch für B1 und B5.

Es wurde gefunden, daß die Kombination der Komponente A und B zu einer beträchtlichen Verbesserung der Ansprechzeiten und zu niedrigen Schwellenspannungen führt, wobei gleichzeitig breite nematische Phasen mit tiefen Übergangstemperaturen smektisch-nematisch erzielt werden.

Vorzugsweise erhalten die erfindungsgemäßen Mischungen Verbindungen der Formeln B4 und/oder B5, vorzugsweise in einem Gesamtanteil von 15 bis 35 Gew.-%, vorzugsweise 20 bis 30 Gew.-%. In dieser besonders bevorzugten Ausführungsform werden besonders niedrige Schwellenspannungen bie gleichzeitig etwas erhöhter Doppelbrechung erzielt. In B4 und B5 ist X vorzugsweise F, Cl oder CF₃ und Y bedeutet vorzugsweise F, wobei in B5 einer oder beide der Reste Y F bedeuten können.

Die Komponenten der erfindungsgemäßen Medien sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Halogenalkyl ist Chlor- oder Fluoralkyl, wobei letzteres bevorzugt ist.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R, X und Y können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Komponenten A, B und C hängt weitgehend von den gewünschten Eigenschaften, von der Wahl der Verbindungen in den Gruppen A, B und C und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gemische können eine oder mehrere weitere Komponenten (insbesondere D1, D2, D3, D4 und/oder D5) enthalten zwecks Optimierung verschiedener Eigenschaften. Der beobachtete Effekt auf die Ansprechzeiten und die Schwellenspannung ist jedoch in der Regel umso größer je höher die Gesamtkonzentration an den Komponenten A, B und C ist, die vorzugsweise ≥ 80 Gew.-% beträgt. Besonders bevorzugt sind Mischungen bestehend aus A, B, C und 0 bis 10 Gew.-% D.

Die erfindungsgemäßen Gemischen enthalten vorzugsweise eine oder mehrere Verbindungen der Formel A1a. Die Gesamtmenge an Verbindungen der Formel Ia im Gemisch beträgt vorzugsweise mindestens 10 Gew.-%, besonders bevorzugt mindestens 15 Gew.-%. 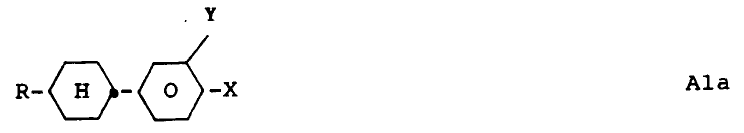 (X ist vorzugsweise F oder Cl, insbesondere F. Y ist H oder F).

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{B} eine smektisch B, N eine nematische und I die isotrope Phase. V₁₀ bezeichnet die Spannung für 10 % Kontrast (Blickrichtung senkrecht zur Plattenoberfläche) gemessen bei d.Δn = 0,4 µm. tₒₙ bezeichnet die Einschaltzeit und t_{off} die Ausschaltzeit bei einer Betriebsspannung entsprechend dem 2,5-fachen Wert von V₁₀. Δn bezeichnet die optische Anisotropie und nₒ den Brechungsindex. Δε bezeichnet die dielektrische Anisotropie (Δε = ε _{||} - ε_{┴}, wobei ε_{||} die Dielektrizitätskonstante parallel zu den Moleküllängsachsen und ε_{┴} die Dielektrizitätskonstante senkrecht dazu bedeutet. Die elektrooptischen Daten wurden in einer TN-Zelle mit d. Δn = 0,4 µm bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

Im folgenden ist die Zusammensetzung der Medien der Beispiele 1 bis 34 angegeben, wobei die einzelnen Verbindungen wie folgt codiert sind:
- CBC-33F:: 4,4'-Bis-(trans-4-propylcyclohexyl)-2-fluorbiphenyl
- CBC-55F:: 4,4'-Bis-(trans-4-pentylcyclohexyl)-2-fluorbiphenyl
- CBC-53F:: 4-(trans-4-Pentylcyclohexyl)-4'-(trans-4-propylcyclcohexyl)-2-fluorbiphenyl
- CBC-33:: 4,4'-Bis-(trans-4-propylcyclohexyl)-biphenyl
- CBC-55:: 4,4'-Bis-(trans-4-pentylcyclohexyl)-biphenyl
- CBC-53:: 4-(trans-4-Pentylcyclohexyl)-4'-(trans-4-propylcyclohexyl)-biphenyl
- PCH-5F:: trans-1-p-Fluorphenyl-4-pentylcyclohexan
- PCH-6F:: trans-1-p-Fluorphenyl-4-hexylcyclohexan
- PCH-7F:: trans-1-p-Fluorphenyl-4-heptylcyclohexan
- EPCH-20CF₃:: 1-(trans-4-Ethylcyclohexyl)-2-(p-trifluormethoxyphenyl)-ethan
- EPCH-30CF₃:: 1-(trans-4-Propylcyclohexyl)-2-(p-trifluormethoxyphenyl)-ethan
- EPCH-50CF₃:: 1-(trans-4-Pentylcyclohexyl)-2-(p-trifluormethoxyphenyl)-ethan
- EPCH-70CF₃:: 1-(trans-4-Heptylcyclohexyl)-2-(p-trifluormethoxyphenyl)-ethan
- PCH-30CF₃:: trans-1-p-Trifluormethoxyphenyl-4-propylcyclohexan
- PCH-50CF₃:: trans-1-p-Trifluormethoxyphenyl-4-pentylcyclohexan
- ECCP-30CF₃:: 1-[trans-4-(trans-4-Propylcyclohexyl)-cyclohexyl]-2-(p-trifluormethoxyphenyl)-ethan
- ECCP-50CF₃:: 1-[trans-4-(trans-4-Pentylcyclohexyl)-cyclohexyl]-2-(p-trifluormethoxyphenyl)-ethan
- CCP-20CF₃:: p-[trans-4-(trans-4-Ethylcyclohexyl)-cyclohexyl]-trifluormethoxybenzol
- CCP-30CF₃:: p-[trans-4-(trans-4-Propylcyclohexyl)-cyclohexyl]-trifluormethoxybenzol
- CCP-40CF₃:: p-[trans-4-(trans-4-Butylcyclohexyl)-cyclohexyl]-trifluormethoxybenzol
- CCP-50CF₃:: p-[trans-4-(trans-4-Pentylcyclohexyl)-cyclohexyl]-trifluormethoxybenzol
- BCH-30CF₃:: 4-Trifluormethoxy-4'-(trans-4-propylcyclohexyl)-biphenyl
- ECCP-3F.F:: 1-[trans-4-(trans-4-Propylcyclohexyl)-cyclohexyl]-2-(3,4-difluorphenyl)-ethan
- ECCP-5F.F:: 1-[trans-4-(trans-4-Pentylcyclohexyl)-cyclohexyl]-2-(3,4-difluorphenyl)-ethan
- ECCP-2F.F:: 1-[trans-4-(trans-4-Propylcyclohexyl)-cyclohexyl]-2-(3,4-difluorphenyl)-ethan
- CCP-3F.F:: 4-[trans-4-(trans-4-Propylcyclohexyl)-cyclohexyl]-1,2-difluorbenzol
- CCP-2F.F:: 4-[trans-4-(trans-4-Ethylcyclohexyl)-cyclohexyl]-1,2-difluorbenzol
- CCP-4F.F:: 4-[trans-4-(trans-4-Butylcyclohexyl)-cyclohexyl]-1,2-difluorbenzol
- CCP-5F.F:: 4-[trans-4-(trans-4-Pentylcyclohexyl)-cyclohexyl]-1,2-difluorbenzol
- CCP-3F:: 4-[trans-4-(trans-4-Propylcyclohexyl)-cyclohexyl]-fluorbenzol
- ECCP-3F:: 1-[trans-4-(trans-4-Propylcyclohexyl)-cyclohexyl]-2-(p-fluorphenyl)-ethan
- ECCP-5F:: 1-[trans-4-(trans-4-Pentylcyclohexyl)-cyclohexyl]-2-(p-fluorphenyl)-ethan
- CP-3F:: trans-4-(trans-4-Propylcyclohexyl)-cyclohexancarbonsäure-(p-fluorphenylester)
- CP-5F:: trans-4-(trans-4-Propylcyclohexyl)-cyclohexancarbonsäure-(p-fluorphenylester)
- PYP-2F: 2-p-Fluorphenyl-5-ethylpyrimidin
- PYP-3F: 2-p-Fluorphenyl-5-propylpyrimidin
- PYP-5F:: 2-p-Fluorphenyl-5-pentylpyrimidin
- PYP-6F:: 2-p-Fluorphenyl-5-hexylpyrimidin
- PYP-7F:: 2-p-Fluorphenyl-5-heptylpyrimidin
- ECCP-3CF₃:: 1-[trans-4-(trans-4-Propylcyclohexyl)-cyclohexyl]-2-(p-trifluormethylphenyl)-ethan
- ECCP-5CF₃:: 1-[trans-4-(trans-4-Pentylcyclohexyl)-cyclohexyl]-2-(p-trifluormethylphenyl)-ethan
- PDX-3F: 2-p-Fluorphenyl-5-propyl-1,3-dioxan
- PDX-4F: 2-p-Fluorphenyl-5-butyl-1,3-dioxan
- PDX-5F: 2-p-Fluorphenyl-5-pentyl-1,3-dioxan
- PDX-3F.F: 2-(3,4-Difluorphenyl)-5-propyl-1,3-dioxan
- PDX-5F.F: 2-(3,4-Difluorphenyl)-5-pentyl-1,3-dioxan
- PDX-3Cl: 2-p-Chlorphenyl-5-propyl-1,3-dioxan
- PDX-4Cl: 2-p-chlorphenyl-5-butyl-1,3-dioxan
- PDX-5Cl: 2-p-chlorphenyl-5-pentyl-1,3-dioxan
- PDX-3CF₃: 2-p-Trifluormethylphenyl-5-propyl-1,3-dioxan
- PDX-4CF₃: 2-p-Trifluormethylphenyl-5-butyl-1,3-dioxan
- PDX-5CF₃: 2-p-Trifluormethylphenyl-5-pentyl-1,3-dioxan
- PDX-30CF₃: 2-p-Trifluormethoxyphenyl-5-propyl-1,3-dioxan
- PDX-40CF₃: 2-p-Trifluormethoxyphenyl-5-butyl-1,3-dioxan
- PDX-50CF₃: 2-p-Trifluormethoxyphenyl-5-pentyl-1,3-dioxan
- PCH-3CF₃:: trans-1-p-Trifluormethylphenyl-4-propylcyclohexan
- PCH-5CF₃:: trans-1-p-Trifluormethylphenyl-4-pentylcyclohexan
- PCH-6CF₃:: trans-1-p-Trifluormethylphenyl-4-hexylcyclohexan
- PCH-7CF₃:: trans-1-p-Trifluormethylphenyl-4-heptylcyclohexan
- PCH-3Cl:: trans-1-p-Chlorphenyl-4-propylcyclohexan
- PCH-4Cl:: trans-1-p-Chlorphenyl-4-butylcyclohexan
- PCH-5Cl:: trans-1-p-Chlorphenyl-4-pentylcyclohexan
- PCH-6Cl:: trans-1-p-Chlorphenyl-4-hexylcyclohexan
- PCH-7Cl:: trans-1-p-Chlorphenyl-4-heptylcyclohexan
- BCH-3F.F:: 3,4-Difluor-4'-(trans-4-propylcyclohexyl)-biphenyl
- BCH-5F.F:: 3,4-Difluor-4'-(trans-4-pentylcyclohexyl)-biphenyl
- BCH-3FF :: 2',4-Difluor-4'-(trans-4-propylcyclohexyl)-biphenyl
- BCH-5FF :: 2',4-Difluor-4'-(trans-4-pentylcyclohexyl)-biphenyl
- BCH-3FCF₃:: 2'-Fluor-4-trifluormethyl-4'-(trans-4-propylcyclohexyl)-biphenyl
- BCH-5FCF₃:: 2'-Fluor-4-trifluormethyl-4'-(trans-4-pentylcyclohexyl)-biphenyl
- CCEB-3Cl.F:: 1-[trans-4-(trans-4-Propylcyclohexyl)-cylcohexyl]-2-[p-(4-chlor-3-fluorphenyl)-phenyl]-ethan
- PCH-3Cl.F:: trans-1-(4-Chlor-3-fluorphenyl)-4-propylcyclohexan
- PCH-5Cl.F:: trans-1-(4-Chlor-3-fluorphenyl)-4-pentylcyclohexan
- BCH-3OCF₃.F:: 3-Fluor-4-trifluormethoxy-4'-(trans-propylcyclohexyl)-biphenyl
- BCH-5OCF₃.F:: 3-Fluor-4-trifluormethoxy-4'-(trans-pentylcyclohexyl)-biphenyl
- BCH-3F.F.F:: 3,4,5-Trifluor-4'-(trans-4-propylcyclohexyl)-biphenyl
- BCH-5F.F.F:: 3,4,5-Trifluor-4'-(trans-4-pentylcyclohexyl)-biphenyl
- CCP-3OCF₃.F:: 4-[trans-4-(trans-4-Propylcyclohexyl)-cyclohexyl]-2-fluoro-trifluormethoxybenzol
- CCP-5OCF₃.F:: 4-[trans-4-(trans-4-Pentylcyclohexyl)-cyclohexyl]-2-fluoro-trifluormethoxybenzol
- CCP-3F.F.F:: 4-[trans-4-(trans-4-Propylcyclohexyl)-cyclohexyl]-1,2,6-trifluorbenzol
- CCP-5F.F.F:: 4-[trans-4-(trans-4-Pentylcyclohexyl)-cyclohexyl]-1,2,6-trifluorbenzol

### Beispiel 1

| | | |
|---|---|---|
| PCH-30CF₃ | 20.0 | S < -40 N 64 I |
| PCH-5F | 10.0 | V₁₀ 1,85 Volt |
| CCP-20CF₃ | 8.0 | Δn 0,071 |
| CCP-30CF₃ | 13.0 | |
| CCP-40CF₃ | 5.0 | |
| CCF-50CF₃ | 12.0 | |
| ECCP-3F.F | 15.0 | |
| ECCP-5F.F | 12.0 | |
| ECCP-2F.F | 5.0 | |

### Beispiel 2

| | | |
|---|---|---|
| PCH-5F | 17.2 | N 66 I |
| PCH-7F | 16.0 | V₁₀ 1,62 Volt |
| CCP-20CF₃ | 6.4 | Δn 0,095 |
| CCP-30CF₃ | 10.6 | |
| CCP-40CF₃ | 4.2 | |
| CCP-50CF₃ | 9.6 | |
| BCH-3F.F | 18.0 | |
| BCH-5F.F | 18.0 | |

### Beispiel 3

| | | |
|---|---|---|
| PCH-5F | 16.0 | N 65 I |
| PCH-7F | 18.0 | V₁₀ 1,64 Volt |
| CCP-20CF₃ | 10.0 | Δn 0,087 |
| CCP-30CF₃ | 12.0 | |
| CCP-40CF₃ | 7.0 | |
| CCP-50CF₃ | 12.0 | |
| BCH-5F.F | 25.0 | |

### Beispiel 4

| | | |
|---|---|---|
| PCH-5F | 11.0 | S < -30 N 60 I |
| PCH-6F | 10.0 | V₁₀ 1,61 Volt |
| PCH-7F | 16.0 | Δn 0,084 |
| CCP-20CF₃ | 9.0 | Viskosität bei 20° 12 m Pa.s |
| CCP-30CF₃ | 12.0 | |
| CCP-40CF₃ | 7.0 | |
| CCP-50CF₃ | 12.0 | |
| BCH-3F.F | 10.0 | |
| BCH-5F.F | 13.0 | |

### Beispiel 5

| | | |
|---|---|---|
| PCH-5F | 10.0 | N 62 I |
| PCH-6F | 9.0 | V₁₀ 1,64 Volt |
| PCH-7F | 15.0 | Δn 0,087 |
| CCP-20CF₃ | 9.0 | |
| CCP-30CF₃ | 12.0 | |
| CCP-40CF₃ | 7.0 | |
| CCP-50CF₃ | 12.0 | |
| BCH-3F.F | 11.0 | |
| BCH-5F.F | 15.0 | |

### Beispiel 6

| | | |
|---|---|---|
| PCH-5F | 16.0 | S < -30 N 65 I |
| PCH-7F | 18.0 | V₁₀ 1,64 Volt |
| CCP-20CF₃ | 10.0 | Δn 0,087 |
| CCP-30CF₃ | 12.0 | |
| CCP-40CF₃ | 7.0 | |
| CCP-50CF₃ | 12.0 | |
| BCH-5F.F | 25.0 | |

### Beispiel 7

| | | |
|---|---|---|
| PCH-5F | 12.0 | S < -30 N 63 I |
| PCH-6F | 7.0 | V₁₀ 1,65 Volt |
| PCH-7F | 16.0 | Δn 0,084 |
| CCP-20CF₃ | 10.0 | |
| CCP-30CF₃ | 12.0 | |
| CCP-40CF₃ | 8.0 | |
| CCP-50CF₃ | 12.0 | |
| BCH-3F.F | 10.0 | |
| BCH-5F.F | 13.0 | |

### Beispiel 8

| | | |
|---|---|---|
| PCH-5F | 10.0 | S < -30 N 68 I |
| PCH-6F | 7.0 | V₁₀ 1,65 Volt |
| PCH-7F | 15.0 | Δn 0,088 |
| CCP-20CF₃ | 10.0 | Viskosität bei 20° 13 m Pa.s |
| CCP-30CF₃ | 12.0 | |
| CCP-40CF₃ | 8.0 | |
| CCP-50CF₃ | 12.0 | |
| BCH-3F.F | 10.0 | |
| BCH-5F.F | 16.0 | |

### Beispiel 9

| | |
|---|---|
| PCH-5Cl | 16.0 |
| PCH-7Cl | 18.0 |
| CCP-2F.F | 10.0 |
| CCP-3F.F | 12.0 |
| CCP-4F.F | 7.0 |
| CCP-5F.F | 12.0 |
| BCH-5F.F | 25.0 |

### Beispiel 10

| | |
|---|---|
| PCH-5F | 11.0 |
| PCH-6F | 10.0 |
| PCH-7F | 16.0 |
| CCP-20CF₃ | 9.0 |
| CCP-30CF₃ | 12.0 |
| CCP-40CF₃ | 7.0 |
| CCP-50CF₃ | 12.0 |
| BCH-3FF | 10.0 |
| BCH-5FF | 13.0 |

### Beispiel 11

| | |
|---|---|
| PDX-3F.F | 10.0 |
| PCH-6F | 9.0 |
| PCH-7F | 15.0 |
| CCP-20CF₃ | 9.0 |
| CCP-30CF₃ | 12.0 |
| CCP-40CF₃ | 7.0 |
| CCP-50CF₃ | 12.0 |
| BCH-3F.F | 11.0 |
| BCH-5F.F | 15.0 |

### Beispiel 12

| | |
|---|---|
| PDX-3F | 16.0 |
| PCH-5F | 18.0 |
| CCP-2F.F | 10.0 |
| CCP-3F.F | 12.0 |
| CCP-4F.F | 7.0 |
| CCP-5F.F | 12.0 |
| BCH-5F.F | 25.0 |

### Beispiel 13

| | |
|---|---|
| PDX-5CF₃ | 12.0 |
| PCH-6F | 7.0 |
| PCH-7F | 12.0 |
| CCP-2F.F | 11.0 |
| CCP-3F.F | 13.0 |
| CCP-4F.F | 9.0 |
| CCP-5F.F | 13.0 |
| BCH-3F.F | 10.0 |
| BCH-5F.F | 13.0 |

### Beispiel 14

| | |
|---|---|
| PCH-5Cl | 10.0 |
| PCH-6Cl | 7.0 |
| PCH-7Cl | 15.0 |
| CCP-20CF₃ | 10.0 |
| CCP-30CF₃ | 12.0 |
| CCP-40CF₃ | 8.0 |
| CCP-50CF₃ | 12.0 |
| BCH-3F.F | 10.0 |
| BCH-5F.F | 16.0 |

### Beispiel 15

| | |
|---|---|
| PCH-3Cl.F | 15.0 |
| PCH-5Cl.F | 15.0 |
| CCP-20CF₃ | 8.0 |
| CCP-30CF₃ | 13.0 |
| CCP-40CF₃ | 8.0 |
| CCP-50CF₃ | 13.0 |
| ECCP-3F.F | 10.0 |
| BCH-3F.F | 8.0 |
| BCH-5F.F | 8.0 |
| CBC-33F | 2.0 |

### Beispiel 16

| Substance | mass-% | |
|---|---|---|
| PCH-5F | 5.0 | N 92 I |
| PCH-7F | 6.0 | V₁₀ 1.5 V (d. Δn = 0,4 µm) |
| CCP-20CF₃ | 11.0 | Δn 0,094 |
| CCP-30CF₃ | 12.0 | η₂₀ 15mm²/s (cSt) |
| CCP-40CF₃ | 10.0 | |
| CCP-50CF₃ | 12.0 | |
| BCH-30CF₃.F | 12.0 | |
| BCH-5F.F.F | 11.0 | |
| CCP-3F.F.F | 12.0 | |
| CCP-5F.F.F | 9.0 | |

### Beispiel 17

| Substance | mass-% | |
|---|---|---|
| PCH-5F | 5.0 | N 96 I |
| PCH-7F | 6.0 | V₁₀ 1,65 V |
| CCP-20CF₃ | 11.0 | Δn 0.092 |
| CCP-30CF₃ | 12.0 | η₂₀ 15mm²/s (cSt) |
| CCP-40CF₃ | 10.0 | |
| CCP-50CF₃ | 12.0 | |
| BCH-30CF₃.F | 12.0 | |
| BCH-50CF₃.F | 11.0 | |
| CCP-3F. F | 12.0 | |
| CCP-5F.F | 9.0 | |

### Beispiel 18

| Substance | mass-% | |
|---|---|---|
| PCH-5F | 5.0 | N 99 I |
| PCH-7F | 6.0 | V₁₀ 1.7 V |
| CCP-20CF₃ | 11.0 | Δn 0.096 |
| CCP-30CF₃ | 12.0 | η₂₀ 16 mm²/s (cSt) |
| CCP-40CF₃ | 10.0 | |
| CCP-50CF₃ | 12.0 | |
| BCH-30CF₃.F | 12.0 | |
| BCH-50CF₃.F | 11.0 | |
| CCP-30CF₃.F | 12.0 | |
| CCP-50CF₃.F | 9.0 | |

### Beispiel 19

| Substance | mass-% | |
|---|---|---|
| PCH-5F | 5.0 | N 97 I |
| PCH-7F | 6.0 | V₁₀ 1.85 V |
| CCP-20CF₃ | 11.0 | Δn 0.096 |
| CCP-30CF₃ | 12.0 | η₂₀ 17 mm²/s (cSt) |
| CCP-40CF₃ | 10.0 | |
| CCP-50CF₃ | 10.0 | |
| BCH-3F.F | 14.0 | |
| BCH-5F.F | 11.0 | |
| | | |
| CCP-50CF₃.F | 9.0 | |
| CCP-50CF₃.F | 9.0 | |

### Beispiel 20

| Substance | mass-% | |
|---|---|---|
| PCH-5F | 5.0 | N 89 I |
| PCH-7F | 6.0 | V₁₀ 1.7 V |
| CCP-30CF₃ | 12.0 | Δn 0.106 |
| CCP-50CF₃ | 10.0 | η₂₀ 18 mm²/s (cSt) |
| BCH-3F.F | 12.0 | |
| BCH-5F.F | 11.0 | |
| BCH-30CF₃.F | 12.0 | |
| BCH-50CF₃.F | 11.0 | |
| CCP-30CF₃.F | 12.0 | |
| CCP-50CF₃.F | 9.0 | |

### Beispiel 21

| Substance | mass-% | |
|---|---|---|
| PCH-5F | 5.0 | N 91 I |
| PCH-7F | 6.0 | V₁₀ 1,7 V |
| CCP-30CF₃ | 12.0 | Δn 0,093 |
| CCP-50CF₃ | 10.0 | η₂₀ 17 mm²/s (cSt) |
| CCP-3F.F | 12.0 | |
| CCP-5F.F | 11.0 | |
| BCH-30CF₃.F | 12.0 | |
| BCH-50CF₃.F | 11.0 | |
| CCP-30CF₃.F | 12.0 | |
| CCP-50CF₃.F | 9.0 | |

### Beispiel 22

| Substance | mass-% | |
|---|---|---|
| PCH-5F | 5.0 | N 83 I |
| PCH-7F | 6.0 | V₁₀ 1,7 V |
| CCP-2F.F | 12.0 | Δn 0.089 |
| CCP-3F.F | 10.0 | η₂₀ 18 mm²/s (cSt) |
| CCP-4F.F | 12.0 | |
| CCP-5F.F | 11.0 | |
| BCH-30CF₃.F | 12.0 | |
| BCH-50CF₃.F | 11.0 | |
| CCP-30CF₃.F | 12.0 | |
| CCP-50CF₃.F | 9.0 | |

### Beispiel 23

| Substance | mass-% | |
|---|---|---|
| PCH-5F | 5.0 | N 86 I |
| PCH-7F | 6.0 | V₁₀ 1,8 V |
| CCP-2F.F | 12.0 | Δn 0,093 |
| CCP-3F.F | 10.0 | η₂₀ 17 mm²/s (cSt) |
| CCP-4F.F | 12.0 | |
| CCP-5F.F | 11.0 | |
| BCH-30CF₃.F | 12.0 | |
| BCH-50CF₃.F | 11.0 | |
| CCP-30CF₃ | 12.0 | |
| CCP-50CF₃ | 9.0 | |

## Patentansprüche (Patentansprüche für folgende(n) Vertragsstaat(en): DE, FR, GB)

1. Flüssigkristallines Medium bestehend im wesentlichen aus
a) 5-65 Gew.% einer Komponente A bestehend aus zwei oder mehr Verbindungen ausgewählt aus der Gruppe A: 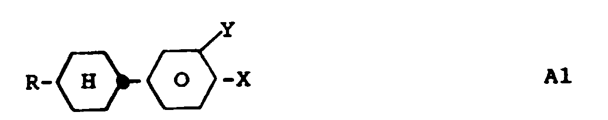 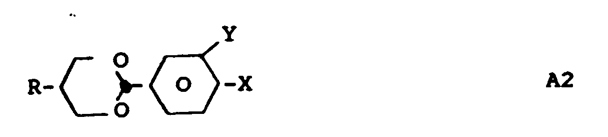 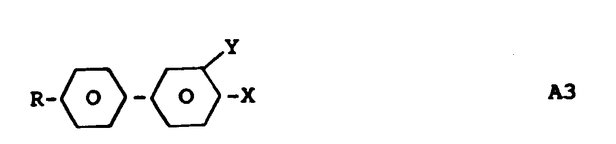 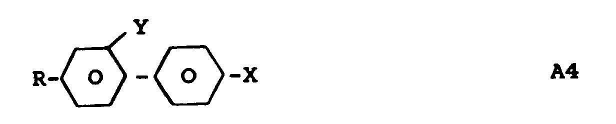
b) 20-95 Gew.X einer Komponente B bestehend aus zwei oder mehr Verbindungen ausgewählt aus der Gruppe B: 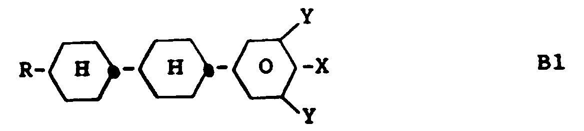 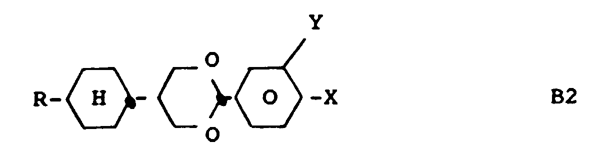 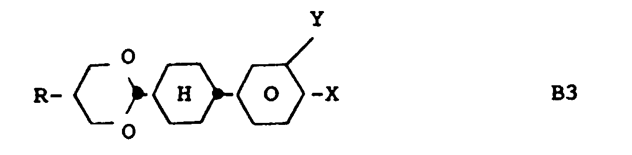 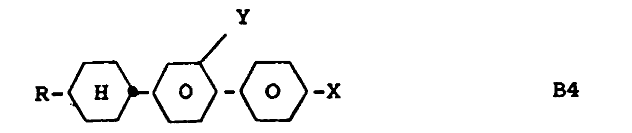 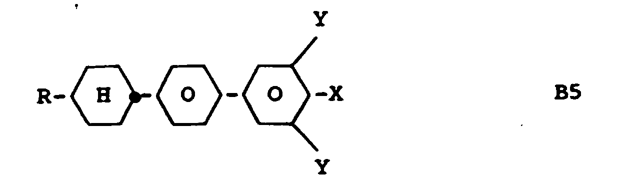 und
c) 0-40 Gew.% einer Komponente C bestehend aus einer oder mehreren Verbindungen mit einem Klärpunkt oberhalb 170 °C,
wobei R, X und Y jeweils unabhängig voneinander die folgenden Bedeutungen haben:
R jeweils Alkyl, Oxaalkyl, Halogenalkyl oder Alkenyl mit bis zu 7 C-Atomen,
X F, Cl, CHF₂, CF₃, OCHF₂ oder OCF₃ und
Y H, F oder Cl,
mit der Maßgabe, daß ein Medium enthaltend eine oder mehrere der folgenden Verbindungen ausgeschlossen ist: 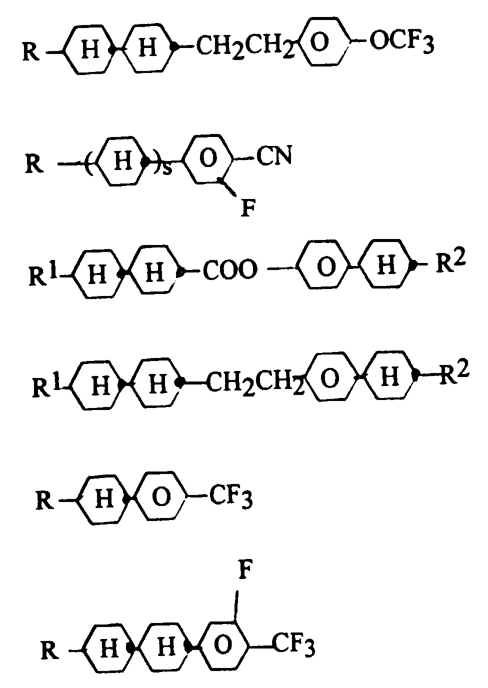 wobei R, R1 und R2 jeweils unabhängig voneinander geradkettiges Alkyl mit bis zu 9 C-Atomen bedeuten und s 1 oder 2 ist.

2. Medium nach Anspruch 1, dadurch gekennzeichnet, daß Komponente C eineoder mehrere Verbindungen ausgewählt aus der Gruppe C enthält: 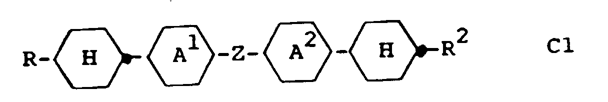 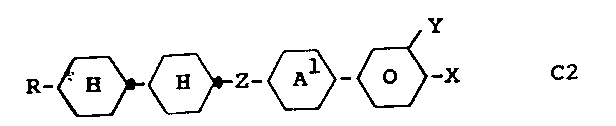 worin R, X und Y die in Anspruch 1 angegebene Bedeutungen haben, R² eine der für R angegebene Bedeutungen hat, Z -C₂H₄-, -CO-O-, -O-CO- oder eine Einfachbindung und A¹ und A² jeweils unabhängig voneinander trans-1,4-Cyclohexylen, 1,4-Phenylen oder 2-oder 3-Fluor-1,4-phenylen bedeuten.

3. Verwendung des Mediums nach Anspruch 1 für elektrooptische Zwecke.

4. Elektrooptische Flüssigkristallanzeige enthaltend ein Medium nach Anspruch 1.

## Patentansprüche (Patentansprüche für folgende(n) Vertragsstaat(en): IT, NL)

1. Flüssigkristallines Medium bestehend im wesentlichen aus
a) 5-65 Gew.% einer Komponente A bestehend aus zwei oder mehr Verbindungen ausgewählt aus der Gruppe A: 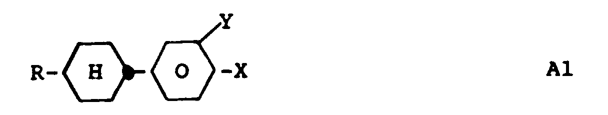 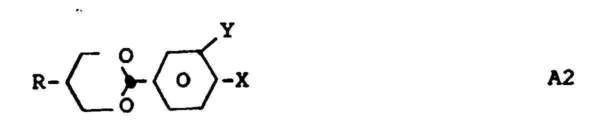 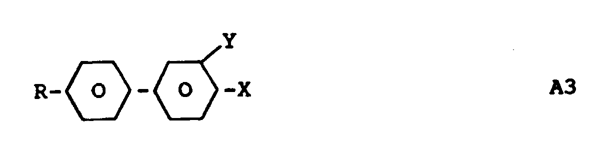 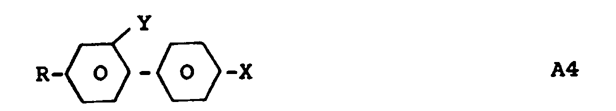
b) 20-95 Gew.% einer Komponente B bestehend aus zwei oder mehr Verbindungen ausgewählt aus der Gruppe B: 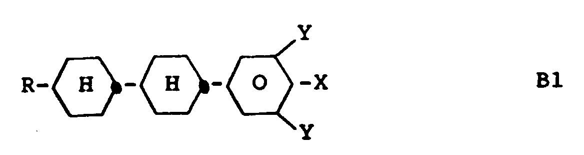 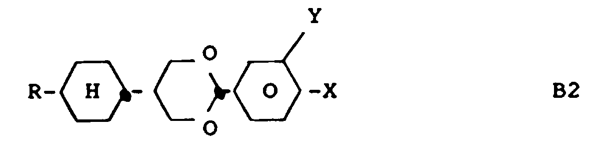 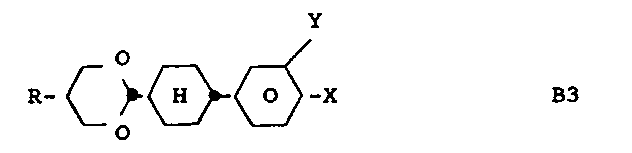 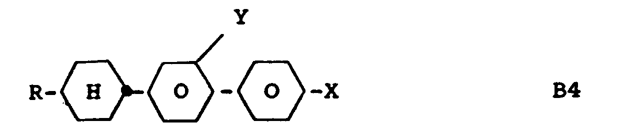 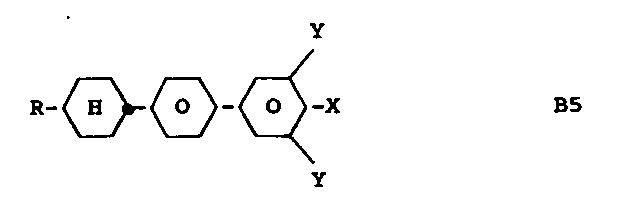 und
c) 0-40 Gew.% einer Komponente C bestehend aus einer oder mehreren Verbindungen mit einem Klärpunkt oberhalb 170 °C,
wobei R, X und Y jeweils unabhängig voneinander die folgenden Bedeutungen haben:
R jeweils Alkyl, Oxaalkyl, Halogenalkyl oder Alkenyl mit bis zu 7 C-Atomen,
X F, Cl, CHF₂, CF₃, OCHF₂ oder OCF₃ und
Y H, F oder Cl,
mit der Maßgabe, daß ein Medium enthaltend eine oder mehrere der folgenden Verbindungen ausgeschlossen ist: 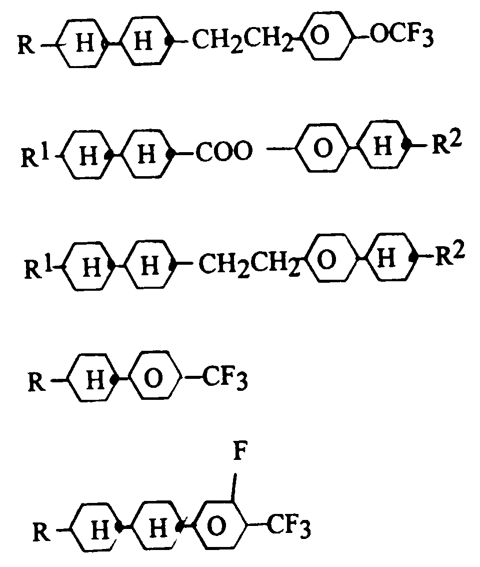 wobei R, R1 und R2 jeweils unabhängig voneinander geradkettiges Alkyl mit bis zu 9 C-Atomen bedeuten.

2. Medium nach Anspruch 1, dadurch gekennzeichnet, daß Komponente Ceineoder mehrere Verbindungen ausgewählt aus der Gruppe C enthält: 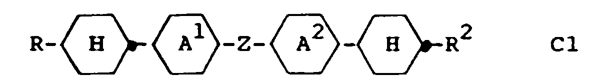 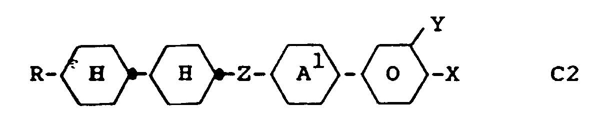 worin R, X und Y die in Anspruch 1 angegebene Bedeutungen haben, R² eine der für R angegebene Bedeutungen hat, Z -C₂H₄-, -CO-O-, -O-CO- oder eine Einfachbindung und A¹ und A² jeweils unabhängig voneinander trans-1,4-Cyclohexylen, 1,4-Phenylen oder 2- oder 3-Fluor-1,4-phenylen bedeuten.

3. Verwendung des Mediums nach Anspruch 1 für elektrooptische Zwecke.

4. Elektrooptische Flüssigkristallanzeige enthaltend ein Medium nach Anspruch 1.

## Claims (Claims for the following Contracting State(s): DE, FR, GB)

1. Liquid-crystalline medium essentially consisting of
a) 5-65% by weight of a component A consisting of two or more compounds selected from group A: 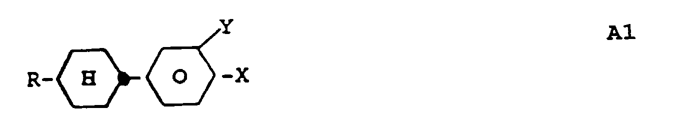 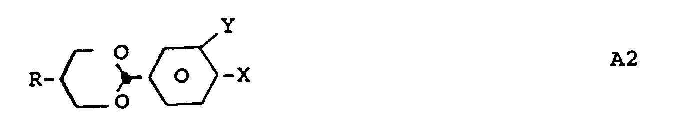 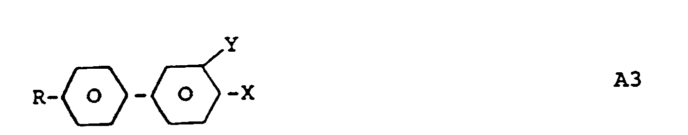 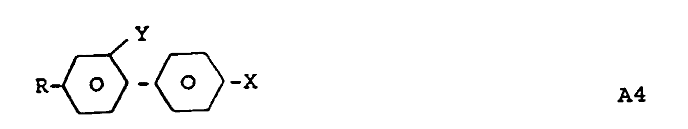
b) 20-95% by weight of a component B consisting of two or more compounds selected from group B: 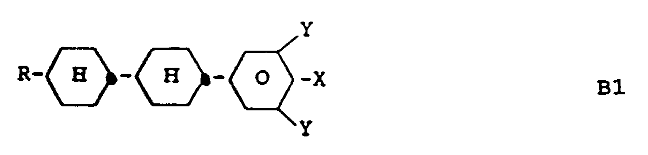 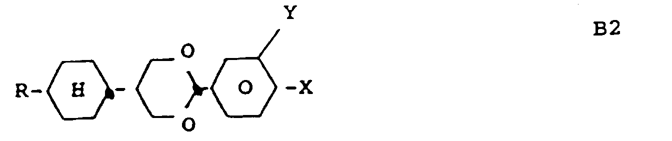 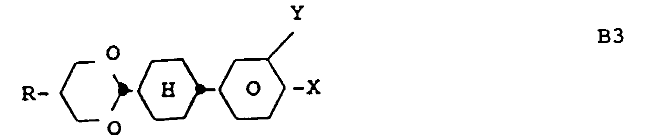 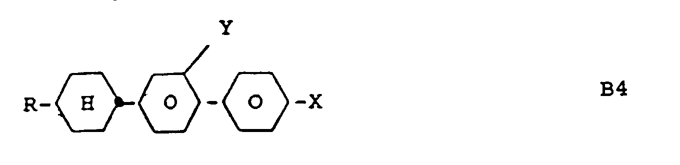 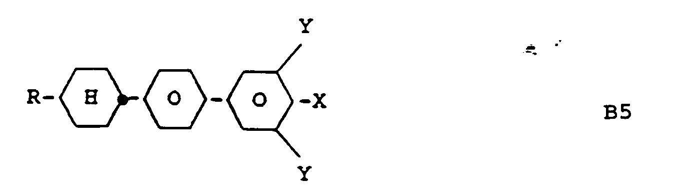 and
c) 0-40% by weight of a component C consisting of one or more compounds having a clearing point above 170°C,
where R, X and Y each, independently of one another, have the following meanings:
R is in each case alkyl, oxaalkyl, haloalkyl or alkenyl having up to 7 carbon atoms,
X is F, Cl, CHF₂, CF₃, OCHF₂ or OCF₃, and
Y is H, F or Cl, with the proviso that a medium comprising one or more of the following compounds is excluded: 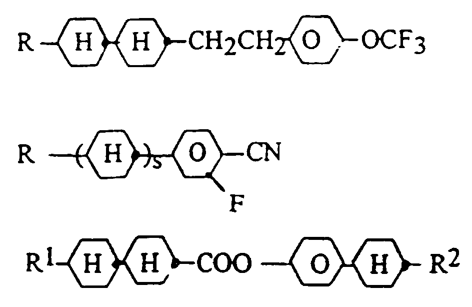 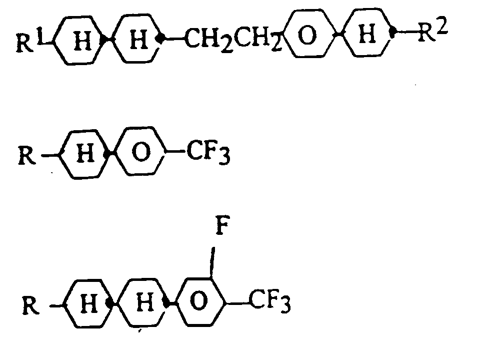
where R, R1 [sic] and R2 [sic] each, independently of one another, are straight-chain alkyl having up to 9 carbon atoms and s is 1 or 2.

2. Medium according to Claim 1, characterised in that component C comprises one or more compounds selected from group C: 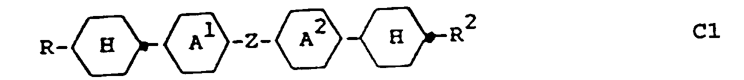 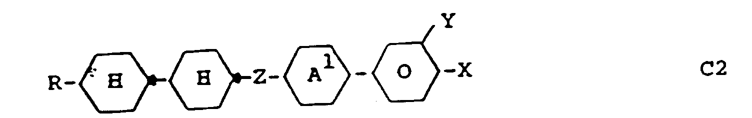 in which R, X and Y are as defined in Claim 1, R² is as defined for R, Z is -C₂H₄-, -CO-O-, -O-CO- or a single bond, and A¹ and A² are each, independently of one another, trans-1,4-cyclohexylene, 1,4-phenylene or 2- or 3-fluoro-1,4-phenylene.

3. Use of the medium according to Claim 1 for electrooptical purposes.

4. Electrooptical liquid-crystalline display containing a medium according to Claim 1.

## Claims (Claims for the following Contracting State(s): IT, NL)

1. Liquid-crystalline medium essentially consisting of
a) 5-65% by weight of a component A consisting of two or more compounds selected from group A: 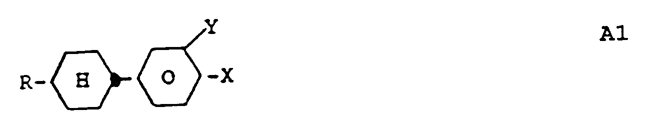 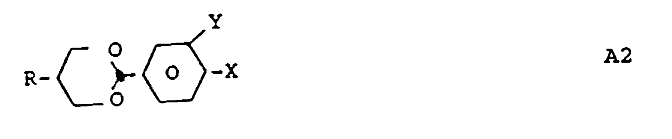 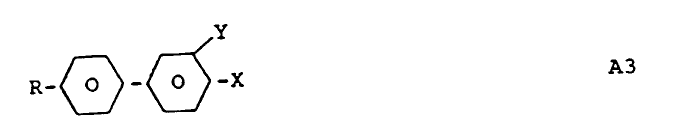 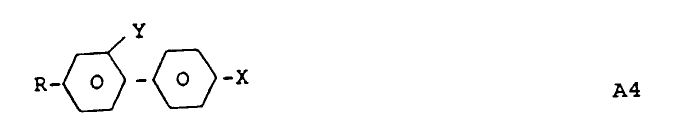
b) 20-95% by weight of a component B consisting of two or more compounds selected from group B: 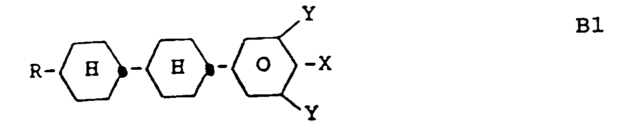 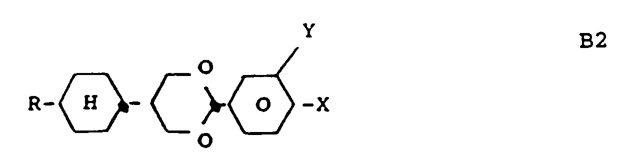 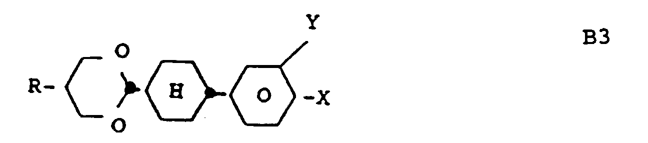 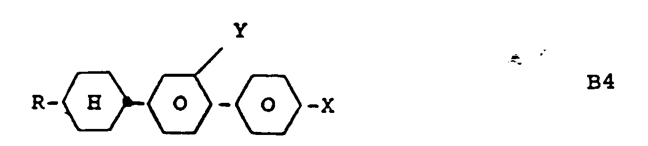 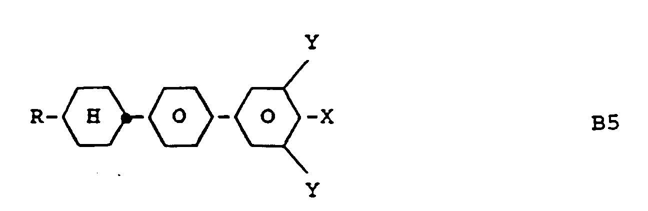 and
c) 0-40% by weight of a component C consisting of one or more compounds having a clearing point above 170°C,
where R, X and Y each, independently of one another, have the following meanings:
R is in each case alkyl, oxaalkyl, haloalkyl or alkenyl having up to 7 carbon atoms,
X is F, Cl, CHF₂, CF₃, OCHF₂ or OCF₃, and
Y is H, F or Cl, with the proviso that a medium comprising one or more of the following compounds excluded: 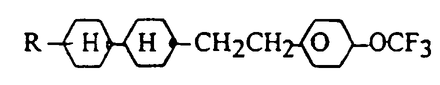 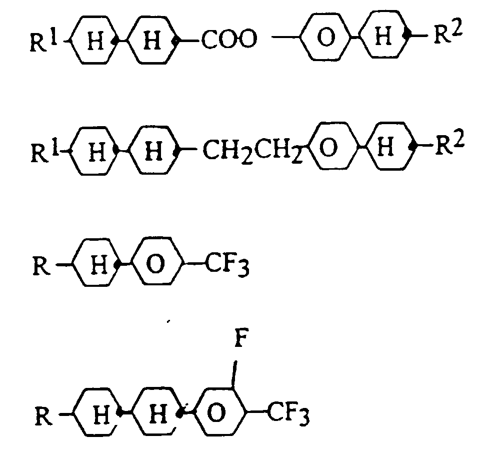
where R, R1 [sic] and R2 [sic] each, independently of one another, are straight-chain alkyl having up to 9 carbon atoms.

2. Medium according to Claim 1, characterised in that component C comprises one or more compounds selected from group C: 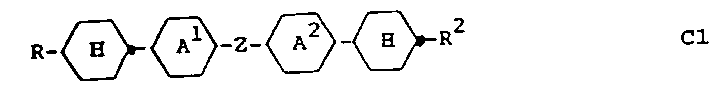 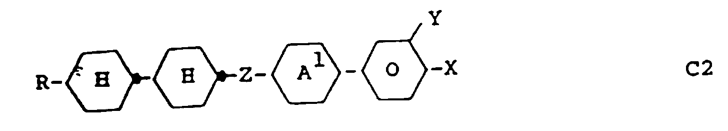 in which R, X and Y are as defined in Claim 1, R² is as defined for R, Z is -C₂H₄-, -CO-O-, -O-CO- or a single bond, and A¹ and A² are each, independently of one another, trans-1,4-cyclohexylene, 1,4-phenylene or 2- or 3-fluoro-1,4-phenylene.

3. Use of the medium according to Claim 1 for electrooptical purposes.

4. Electrooptical liquid-crystalline display containing a medium according to Claim 1.

## Revendications (Revendications pour l'(les) Etat(s) contractant(s) suivant(s): DE, FR, GB)

1. Milieu mésomorphe, constitué essentiellement
a) de 5 à 65 % en poids d'un constituant A, constitué d'au moins deux composés choisis parmi le groupe A : 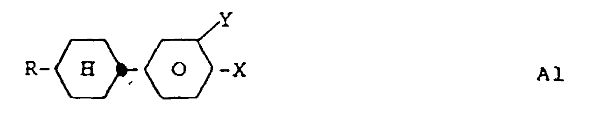 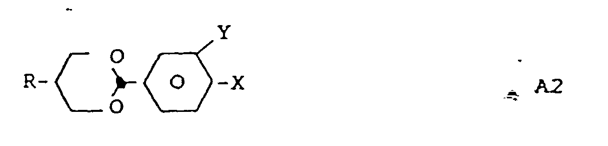 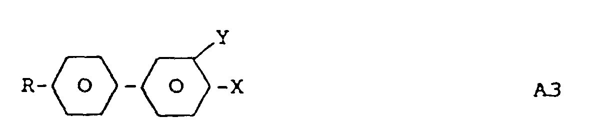 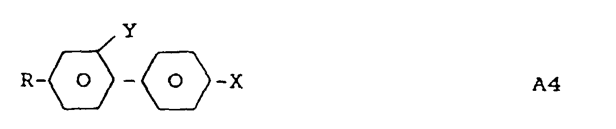
b) de 20 à 95 % en poids d'un constituant B constitué d'au moins deux composés choisis parmi le groupe B : 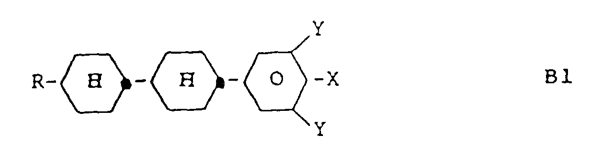 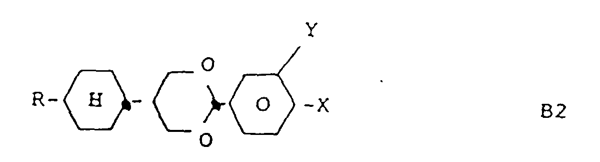 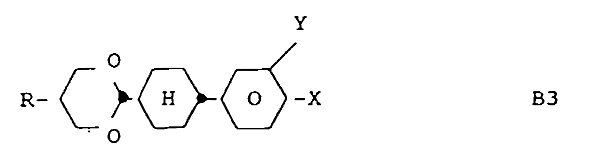 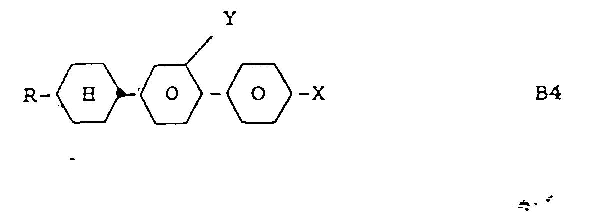 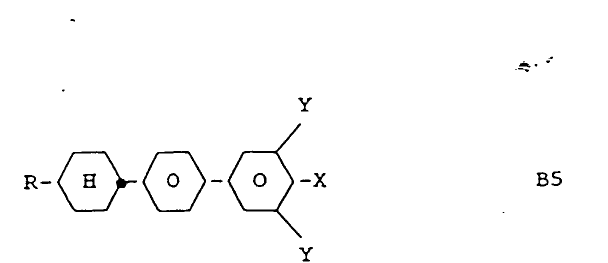 et
c) de 0 à 40 % en poids d'un constituant C, constitué d'un ou plusieurs composés ayant un point de clarification supérieur à 170°C,
où R, X et Y ont, chacun indépendamment des autres, les significations suivantes :
chaque radical R est un groupe alkyle, oxaalkyle, halogènalkyle ou alcényle ayant jusqu'à 7 atomes de carbone,
X est F, Cl, CHF₂, CF₃, OCHF₂ ou OCF₃, et
Y est H, F ou Cl,
sous réserve que l'on exclut un milieu contenant un ou plusieurs des composés suivants : 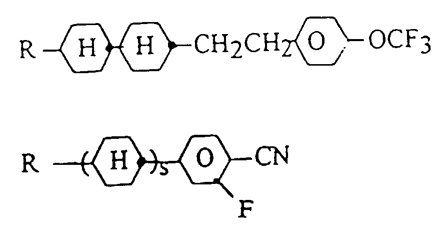 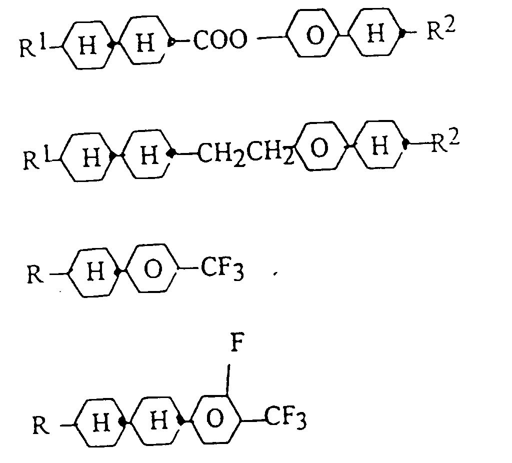 dans lesquels R, R¹ et R², chacun indépendamment des autres, représentent un groupe alkyle à chaîne droite ayant jusqu'à 9 atomes de carbone et s vaut 1 ou 2.

2. Milieu selon la revendication 1, caractérisé en ce que le constituant C contient un ou plusieurs composés choisis parmi le groupe C : 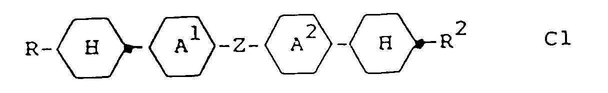 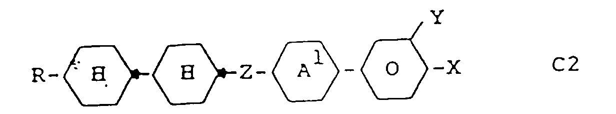 où R, X et Y ont les significations données dans la revendication 1, R² a l'une des significations données pour R, Z est -C₂H₄-, -CO-O-, -O-CO- ou une liaison simple, et A¹ et A², chacun indépendamment de l'autre, représentent un groupe trans-1,4-cyclohexylène, 1,4-phénylène ou 2- ou 3-fluoro-1,4-phénylène.

3. Utilisation du milieu selon la revendication 1 dans des applications électro-optiques.

4. Affichage électro-optique à cristaux liquides contenant un milieu selon la revendication 1.

## Revendications (Revendications pour l'(les) Etat(s) contractant(s) suivant(s): IT, NL)

1. Milieu mésomorphe, constitué essentiellement
a) de 5 à 65 % en poids d'un constituant A, constitué d'au moins deux composés choisis parmi le groupe A : 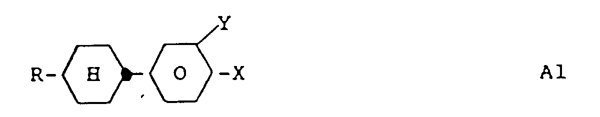 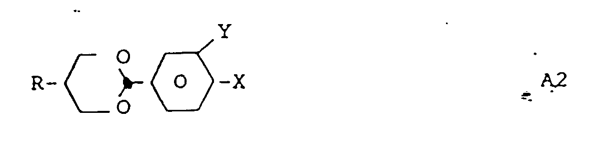 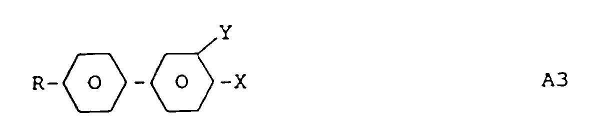 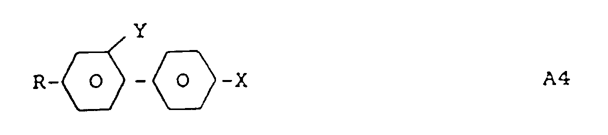
b) de 20 à 95 % en poids d'un constituant B constitué d'au moins deux composés choisis parmi le groupe B : 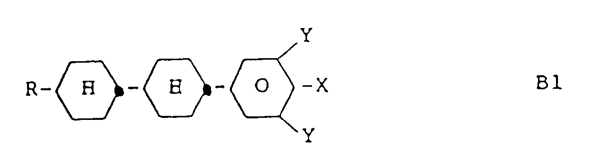 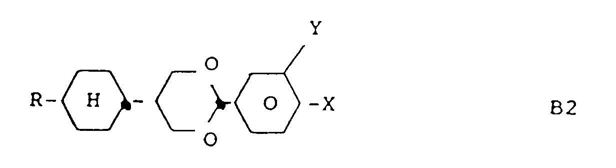 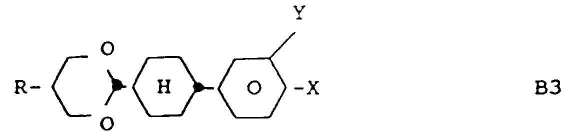 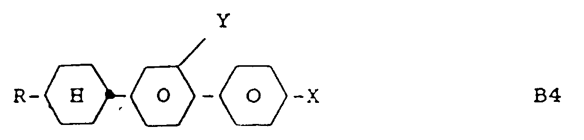 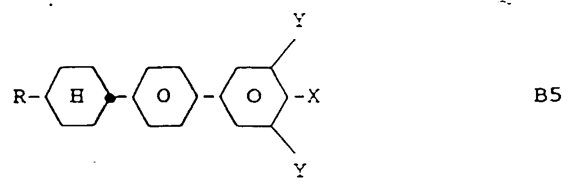 et
c) de O à 40 % en poids d'un constituant C, constitué d'un ou plusieurs composés ayant un point de clarification supérieur à 170°C,
où R, X et Y ont, chacun indépendamment des autres, les significations suivantes :
chaque radical R est un groupe alkyle, oxaalkyle, halogènalkyle ou alcényle ayant jusqu'à 7 atomes de carbone,
X est F, Cl, CHF₂, CF₃, OCHF₂ ou OCF₃, et
Y est H, F ou Cl,
sous réserve que l'on exclut un milieu contenant un ou plusieurs des composés suivants : 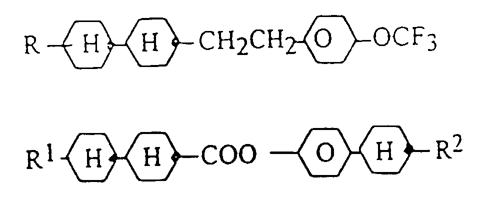 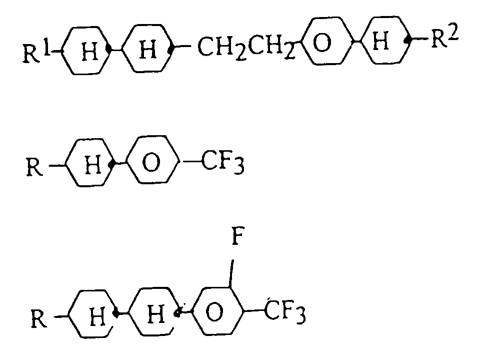 dans lesquels R, R¹ et R², chacun indépendamment des autres, représentent un groupe alkyle à chaîne droite ayant jusqu'à 9 atomes de carbone et s vaut 1 ou 2.

2. Milieu selon la revendication 1, caractérisé en ce que le constituant C contient un ou plusieurs composés choisis parmi le groupe C : 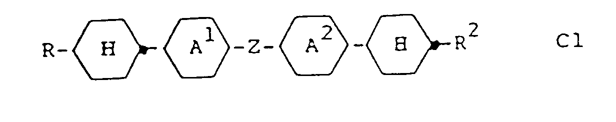 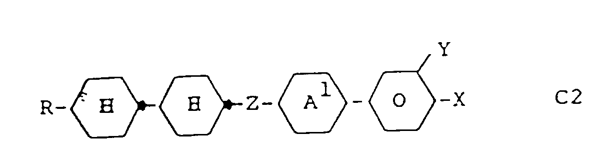 où R, X et Y ont les significations données dans la revendication 1, R² a l'une des significations données pour R, Z est -C₂H₄-, -CO-O-, -O-CO- ou une liaison simple, et A¹ et A², chacun indépendamment de l'autre, représentent un groupe trans-1,4-cyclohexylène, 1,4-phénylène ou 2- ou 3-fluoro-1,4-phénylène.

3. Utilisation du milieu selon la revendication 1 dans des applications électro-optiques.

4. Affichage électro-optique à cristaux liquides contenant un milieu selon la revendication 1.
